# EUROPÄISCHE PATENTSCHRIFT

(11) **EP 1 831 454 B1**
(45) Veröffentlichungstag und Bekanntmachung des Hinweises auf die Patenterteilung: **16.03.2011**
(21) Anmeldenummer: 04801145.6
(22) Anmeldetag: 03.12.2004
(51) Int. Cl.: D07B 1/16, D07B 1/22, D07B 7/14, B29C 47/02

(54) **PRODUKTIONSLINIE ZUR EINBETTUNG VON MEHREREN LITZENSEILEN IN EINEN FLEXIBLEN THERMOPLASTISCHEN KUNSTSTOFF**
PRODUCTION LINE FOR COATING SEVERAL STRANDED CABLES WITH A FLEXIBLE THERMOPLASTIC MATERIAL
LIGNE DE PRODUCTION POUR REVÊTIR PLUSIEURS CÂBLES À TORONS D'UNE MATIÈRE THERMOPLASTIQUE FLEXIBLE

(30) Priorität: 05.12.2003 CH 20812003
(43) Veröffentlichungstag der Anmeldung: 12.09.2007
(60) Teilanmeldung: 10010244.1
(73) Patentinhaber: Brugg Kabel AG, CH-5201 Brugg AG (CH)
(72) Erfinder: JOTTI, Pierangelo, 5524 Niederwil (CH); GASPARINI, Rico, 5000 Aarau (CH); PHILLIPS, Richard, 1700 Fribourg (CH); HODZIC, Jasim, 5105 Auenstein (CH)
(74) Vertreter: Breiter, Heinz
(86) Internationale Anmeldenummer: PCT/CH2004/000721
(87) Internationale Veröffentlichungsnummer: WO 2005/054569

(56) Entgegenhaltungen:
- EP-A- 0 444 245
- WO-A-03/042085
- DE-A- 10 124 362
- US-A- 4 150 929

## Beschreibung

Die Erfindung bezieht sich auf eine Produktionslinie zur Einbettung von mehreren Litzenseilen in einen flexiblen thermoplastischen Kunststoff, welche Produktionslinie je eine Spule zum Abwickeln der Litzenseile, eine Einrichtung zum exakten Richten der Litzenseile, eine Heizung zum Vorwärmen der Litzenseile, wenigstens einen Extruder zur Co-Extrusion der Litzenseile in einer flexiblen Kunststoffummantelung, einen Kühltrog, einen Rollenspeicher, eine Schneideeinrichtung und eine Speicherrolle umfasst.

Die US 3348585 betrifft ein Verfahren und eine Vorrichtung zur Herstellung von industriell verwendbaren Bändern aus Gummi mit darin eingebetteten, in Längsrichtung etwa parallel verlaufenden Litzen, auch Drähte oder Fäden genannt, aus ferromagnetischem Material. Die Litzen bestehen insbesondere aus Stahl, wobei deren magnetische Eigenschaften als Zug- und Abstandhaltekräfte genutzt werden.

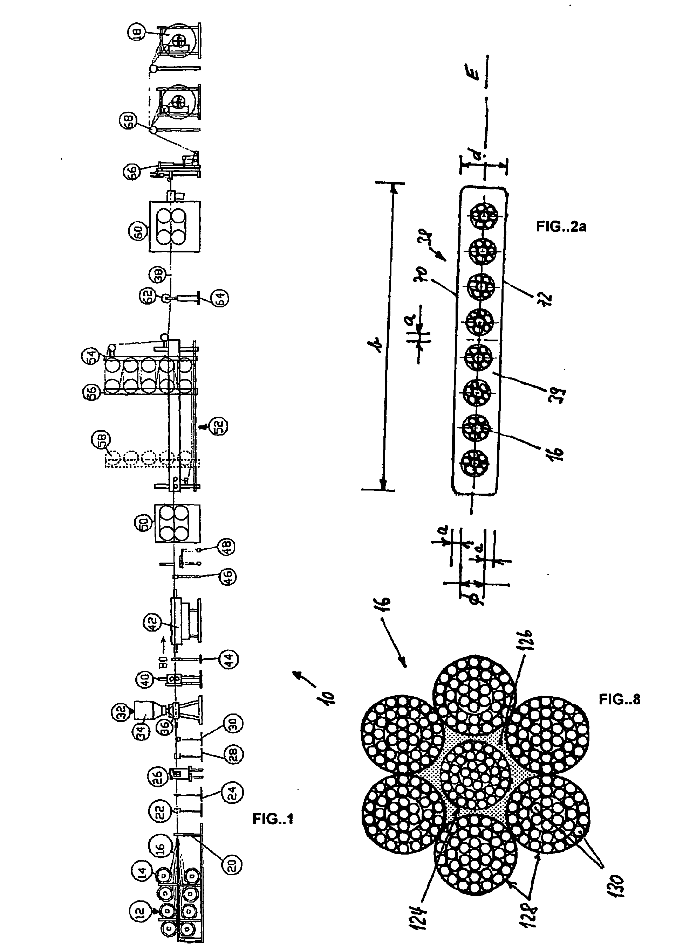

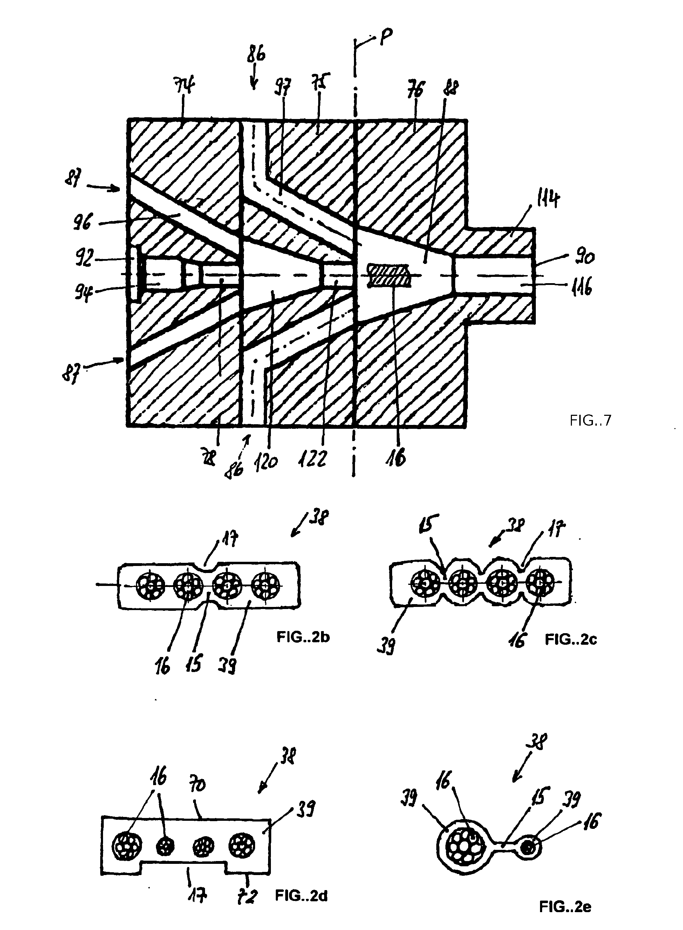

Die GB 1362514 betrifft einen Haspel für bandförmige Hebekabel, in welchem Stahlschnüre von einem synthetischen Kunststoff, insbesondere von Polyurethan umhüllt sind in der Zeichnung werden verschiedene flache Hebekabel dargestellt. Fig. 1 zeigt ein breites, flaches Kabel mit Stahllitzen, welche von Polyurethan umhüllt sind. Es werden auch längslaufende Vertiefungen 17 in der Kunststoffumhüllung gezeigt, diese werden als nicht wesentlich bezeichnet. In Fig. 2 ist ebenfalls ein bandförmiges Hebekabel mit längslaufenden Stahllitzen in einer Kunststoffumhüllung dargestellt, welche beidseits glatt ausgebildete Oberflächen hat, also keine längslaufenden Vertiefungen aufweist.

Die WO 031042085 A2 beschreibt ein Verfahren zur Herstellung eines Liftbandes mit mehreren Schnüren bzw. Litzen (Cords) in einer flach ausgebildeten Umhüllung (Jacket), in welcher die Schnüre in einer ausgewählten Anordnung ausgerichtet sind. Es wird ein spezielles Umhüllungsmaterial ausgewählt und schliesslich die Litzen individueli so gespannt, dass sie überall gleichmässig weit von der glatten Oberfläche des Kunststoffbandes entfernt sind. Das bandförmige Liftband minimalisiert die Erzeugung von störenden Geräuschen und Vibrationen während des Liftbetriebs.

Der Erfinder hat sich die Aufgabe gestellt, eine Produktionslinie gemäss der eingangs genannten Art zu schaffen, welche eine erhöhte Flexibilität aufweist und bandförmige Zugorgane von bester marktüblicher Qualität liefert, wobei der Abstand der zugfesten Litzenseilen von den Bandoberflächen auch bei erhöhter Produktionsgeschwindigkeit exakter und zuverlässiger regelbar ist.

In Bezug auf die Produktionslinie zum Ummanteln wenigstens eines Litzenseils mit einem flexiblen thermoplastischen Kunststoff wird die Aufgabe erfindungsgemäss dadurch gelöst, dass ein Extruder eine Seilführung für die Litzenseile und wenigstens eine Matrize aufweist, welche individuell in einer zur Seilebene abgewinkelten Ebene P mit- und gegeneinander justierbar sind. Spezielle und weiterbildende Ausführungsformen sind wiederum Gegenstand von abhängigen Patentansprüchen.

Die Litzenseite durchlaufen den Extruder und die Austrittsöffnung der Matrize auf einer Seilebene E liegend. Vor allem bei flachen Zugorganen ist von wesentlicher Bedeutung, dass die Litzenseile auf einer Ebene liegen, damit die parallelen Oberflächen der Kunststoffummantelung überall etwa den gleichen Abstand von den eingebetteten Litzenseilen hat. Durch eine relative Verschiebung der Fadenführung, welche auch als Drahtführung bezeichnet wird, gegenüber der Matrize ändert sich die relative Lage der Litzenseile in der Düsenaustrittsöffnung und damit die Lage der Litzenseile in der Kunststoffummantelung. Die Fadenführung und die Matrize können auch miteinander, also bezüglich der Höhe, verschoben werden, ohne dass ihr Abstand ändert. Die gegenüber der Seilebene E abgewinkelte Ebene P hat einen Winkel von vorzugsweise 45 bis 135°, insbesondere verlaufen die beiden Ebenen in einem Winkel von etwa 90°.

Falls mehrere Litzenseile parallel angeordnet auf einer Ebene durch die Produktionslinie laufen, können unmittelbar nach dem Extruder Pressrollen angeordnet werden. Diese bestehen z.B. aus wenigstens einem Rollenpaar, insbesondere zwei Rollenpaaren, welche in zum durchlaufenden Zugorgan rechtwinkliger Richtung justierbar sind. So kann die Lage der Litzenseile im noch weichen Kunststoff korrigiert werden, jedoch nur im Feinbereich von wenigen Zehntel Millimetern. Die Pressrollen können jedoch in Längsrichtung des Zugorgans auch versetzt angeordnet sein und so auf den noch weichen Verbund einwirken.

Weitere Details der Produktionslinie werden in den Zeichnungen dargestellt und entsprechend beschrieben.

Selbstverständlich kann die Produktionslinie auch zur Ummantelung von einzelnen Litzenseilen oder von mehreren, nicht auf einer Ebene liegenden Litzenseilen verwendet werden. Die erfindungswesentlichen Einrichtungen werden in diesem Fall, wenn überflüssig, nicht bedient oder entfernt.

Schliesslich können in einem auf der erfindungsgemässen Produktionslinie durchführbaren Verfahren zum Einbetten wenigstens eines Litzenseils mit einer kunststoffbeschichteten Kernlitze die abgewickelten Litzenseile zur Verbesserung der Haftung der Kunststoffummantelung entfettet und/oder vorbehandelt, auf eine Temperatur von etwa ± 20°C der Schmelztemperatur des die Kernlitze umhüllenden thermoplastischen Kunststoff vorgewärmt und im Extruder mit dem verflüssigten Kunststoff ummantelt werden.

Das Vorwärmen erfolgt beispielsweise mit einer Induktionsheizung, einem Flammenbrenner und/oder einer Warmluftheizung. Dabei werden u.a. Restgase entfernt, die Haftung der Kunststoffummantelung und der Litzenseile wird besser.

Das Umhüllen von Litzenseilen mit einem flexiblen thermoplastischen Kunststoff zur Herstellung eines Zugorgans mittels Co-Extrudierens wird dank der erfindungsgemässen Produktionslinie in optimaler Weise möglich. Eine entscheidende Rolle spielen das Entfetten bzw. Beschichten der freien Oberfläche der Litzenkabel mit einer haftvermittelnden Schicht und das Vorwärmen auf etwa ± 20°C der Schmelztemperatur des verflüssigten Kunststoffs, insgesamt wird eine sprunghafte Verbesserung der Haftung zwischen den Litzenseilen und der Kunststoffummantelung erreicht. Die Verbesserung hält auch bei langfristiger und intensiver Nutzung an. Selbst das dauernde Umlenken um verhältnismässig enge Radien bei hohen Zugkräften, wie dies beim Betrieb von Liften der Fall ist, beeinträchtigt die Haftung zwischen Litzenseilen und Kunststoff nicht oder langfristig betrachtet nur in vernachlässigbarem Ausmass.

Mit dem Verfahren kann auch die Prozessökonomie verbessert werden, es wird eine sehr hohe Durchlaufgeschwindigkeit im Bereich von 10 bis 60 m/Min. erreicht.

Jedes einzelne Litzenseil wird gespannt, vorzugsweise mit einer Zugkraft von 5 bis 100 N, insbesondere 35 bis 45 N. Falls ein Extruder mit einer in Bezug auf die Matrize verschiebbaren Seilführung eingesetzt wird, ist das Spannen der Litzenseile weniger kritisch.

Die geometrische Querschnittsform der Zugorgane wird massgebend durch die Austrittsöffnung des Extruders bestimmt, insbesondere wenn mehrere parallele Litzenseile mit einem gemeinsamen Kunststoff ummantelt werden. Bevorzugt ist eine Bandform mit auf einer Ebene angeordneten Litzenseilen, welche in der Regel querschnittliche Aussenabmessungen im Bereich von 15 x 1,5 bis 100 x 20 mm haben. Die Querschnittsdimensionen richten sich insbesondere auch nach dem Aussendurchmesser der Litzenseile, welcher am häufigsten bei 1 bis 5 mm, insbesondere bei etwa 2 mm, liegt. Die Lage der parallel geführten Litzenseile im eingebetteten Kunststoff kann durch die relative Einstellung von SeilführunglMatrize auf ± 0,1 mm Genauigkeit eingestellt werden. Der Korrekturbereich liegt bei ± 0,5 bis 2 mm.

Bei auf einer Ebene liegenden Litzenseilen mit einer Ummantelung, welche zwei parallel zur Ebene der Litzenseile liegende Aussenflächen hat, kann die relative Lage der Litzenseile und die Aussenseiten der Ummantelung noch modifiziert werden. Unmittelbar nach dem Extruder sind, wie bereits erwähnt, zu diesem Zweck vorzugsweise wenigstens zwei Pressrollen angeordnet. Diese können der Oberfläche des durchlaufenden Zugorgans auch eine bestimmte Struktur verleihen, beispielsweise eine aufgerauhte Oberfläche. Bei aufeinander liegenden Zugorganen wird dadurch der Reibungskoeffizient wesentlich erhöht, die bandförmigen Zugorgane können so zu formstabileren Bandrollen aufgewickelt werden.

Die mit der erfindungsgemässen Produktionslinie herstellbaren Zugorgane haben einen breiten Einsatzbereich. Sie sind insbesondere zum Heben und Ziehen von Lasten geeignet, wenn das Zugorgan ein- oder mehrfach umgeleitet und/oder auf einem Haspel gespeichert wird. Ein wesentliches Verwendungsgebiet stellen Liftbänder oder -seile dar, welche hohen Sicherheitsanforderungen genügen müssen. Sie haben z.B. bei einem Litzendurchmesser von etwa 2 mm eine Zugfestigkeit von wenigstens etwa 4000 kN/Stahllitzenseil. Bei entsprechendem Litzenmaterial können die Zugorgane auch als elektrische Leiter eingesetzt werden.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Produktionslinie zur Herstellung von bandförmigen Zugorganen,
- Fig. 2 einen Querschnitt durch verschiedene Zugorgane,
- Fig. 3 einen Horizontalschnitt durch eine Fadenführung und eine Matrize,
- Fig. 4 einen Vertikalschnitt durch eine Fadenführung und eine Matrize mit Halterung, entlang eines Litzenseils,
- Fig. 5 einen Vertikalschnitt durch eine Fadenführung und eine Matrize,
- Fig. 6 einen Vertikalschnitt durch eine Fadenführung und eine zweiteilige Matrize,
- Fig. 7 eine Variante von Fig. 6, und
- Fig. 8 einen Querschnitt durch ein Litzenseil.

Eine in Fig. 1 dargestellte Produktionslinie 10 zur Herstellung von bandförmigen Zugorganen 38 mit Litzenseilen 16 gemäss Fig. 8 aus verdrillten Stahlfasern und einer rechteckigen Umhüllung 39 aus einem flexiblen thermoplastischen Kunststoff beginnt bei einer Anlage 12 mit vorliegend zweimal acht Spulen 14 zur Abwicklung der flexiblen Litzenseile 16 und endet mit einer Speicherrolle 18 zum Aufwickeln des bandförmigen Zugorgans 38. In industriellen Produktionsanlagen ist die Produktionslinie 10 mehrere Dutzend Meter lang.

Für die Herstellung von Zugorganen 38, z.B. Liftbändem, liegt der Durchmesser Ø der flexiblen Litzenseilen 16 vorliegend bei 2 mm. Alle Llitzenseile 16 müssen den gleichen, konstanten Durchmesser Ø haben, damit sie exakt in der Mitte der Umhüllung 39 aus Kunststoff positioniert werden können. Die Durchmessertoleranz liegt bei höchstens ± 0,05 mm. Das Litzenseil 16 darf weder verschweisst sein noch Verdrillungsdefekte aufweisen. Schliesslich muss das Litzenseil 16 fehlerlos auf der Spule 14 aufgewickelt sein.

Die individuelle Regelung der Zugkraft der Litzenseile 16, welche bei etwa 50 N gehalten wird, erfolgt in an sich bekannter Weise mit einem pneumatischen oder elektromagnetischen System.

Nach dem Abrollen werden die Litzenseile 16 vorerst über einen Ständer 20 mit einem horizontalen Führungsschlitz in eine Ebene umgelegt. Da die Litzenseile 16 sauber und wenn immer möglich ohne flüchtige Gaskomponenten an der Oberfläche sein sollten, werden sie in-line durch eine Reinigungsanlage 22 geführt.

Unmittelbar nach der Reinigungsanlage 22 durchlaufen die Litzenseile 16 einen weiteren Ständer 24 mit einer Einrichtung zum exakten Richten der Litzenseile 16 in einem konstanten horizontalen Abstand. Derart gerichtet durchlaufen die Litzenseile 16 eine Induktionsheizung 26, einen Flammenbrenner 28 und eine Warmluftheizung 30, nach diesem Vorwärmen haben die Litzenseile 16 eine Oberflächentemperatur im Bereich von 100 bis 200°C und alle Restgase für die nachfolgende Kunststoffbeschichtung sind entfernt.

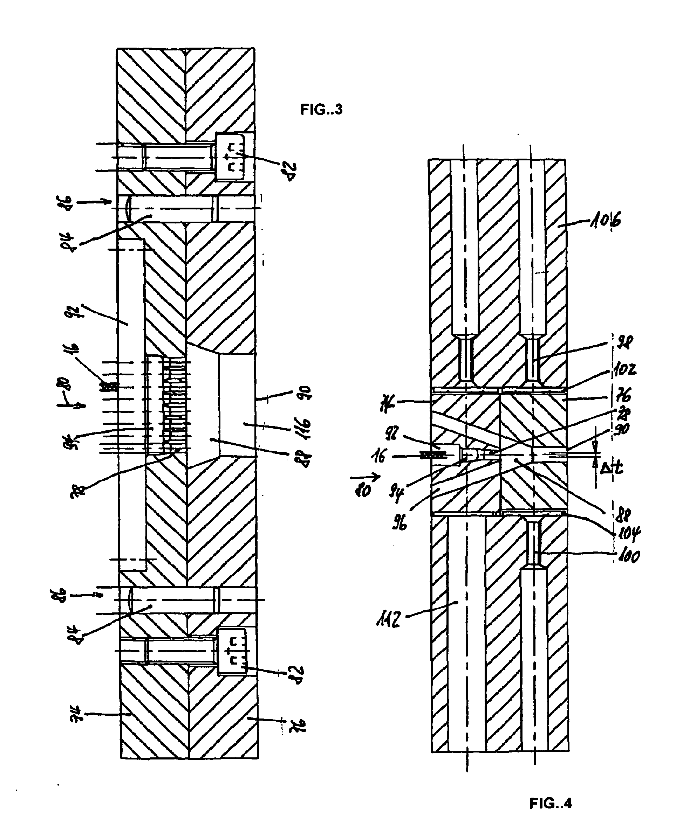

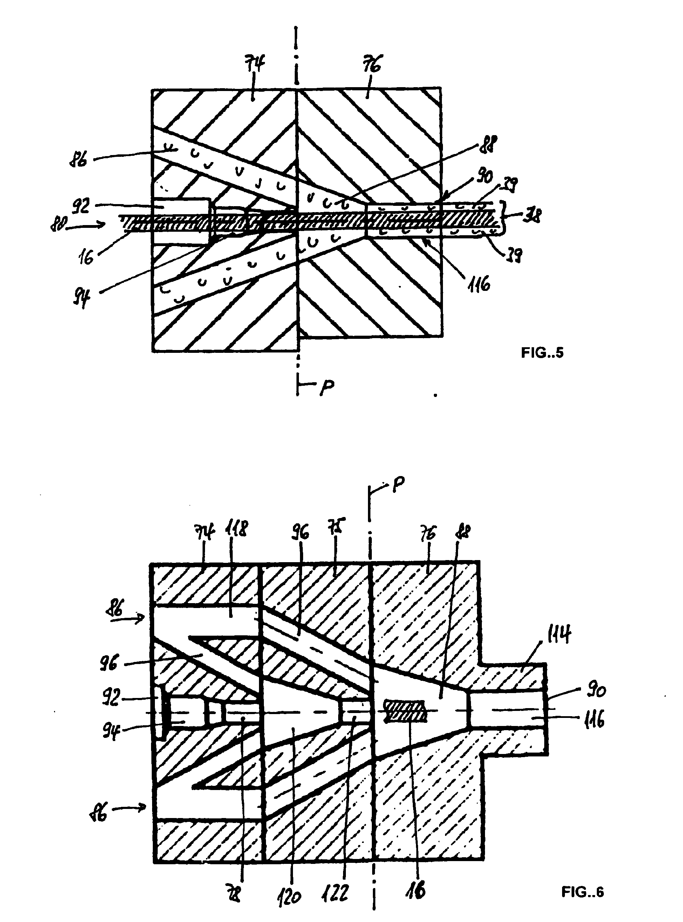

Die gerichteten, gereinigten und vorgewärmten Litzenseile 16 laufen durch einen Extruder 32 mit einer nachfolgend in Fig. 3 bis 6 im Detail dargestellten, erfindungsgemässen Draht- bzw. Fadenführung und Matrize. Die Zufuhr des verflüssigten Kunststoffs, vorliegend Polyurethan, erfolgt senkrecht zur durch einen Pfeil dargestellten Laufrichtung 80 der Litzenseile 16. Der Kunststoff wird in Pulver oder Granulatform in einen Trichter 34 eingefüllt, von wo das nicht sichtbare Schüttgut in eine horizontale Förderschnecke 36 rieselt. Während des Vorschubs wird der Kunststoff verflüssigt und über die Fadenführung in die Matrize gepresst, wo die parallel durchlaufenden Litzenseile 16 mit Kunststoff ummantelt werden. Der mit Ausnahme der Fadenführung und der Matrize an sich bekannte Extruder 32 gewährleistet eine konstante Kunststoffzufuhr und eine hervorragende Qualität, ohne gelierte oder kristallisierte Kunststoffpartikel. Die Austrittsöffnung 90 (Fig. 5, 6) der Matrize definiert die Aussendimensionen eines mit Kunststoff ummantelten Zugorgans 38.

Die endgültigen Dimensionen eines Zugorgans 38 werden durch die anschliessenden Pressrollen 40 aus Tetrafluorethylen (TEFLON, Du Pont) oder einem mit TEFLON beschichteten Werkstoff festgelegt. Durch zwei Rollenpaare 40 wird auch die Oberflächenstruktur des Zugorgans 38 festgelegt. Die Pressrollen 40 dürfen nicht mit dem noch warmen, weichen Material der Zugorgane binden, müssen bezüglich des Rollenspaltes und der Höhe präzis einstellbar und dimensionsstabil sein. Die Rollenoberflächen sind vorliegend aufgerauht ausgebildet und exakt zylindermantelförmig. Dadurch entstehen Zugbänder von langrechteckiger Form und aufgerauhter Oberfläche gemäss Fig. 2a.

Nach den Pressrollen 40 läuft das immer noch warme Zugorgan 38 in einen Kühltrog 42 von beispielsweise 20 bis 40 m Länge. In Fig. 1 ist der Kühltrog 42 stark verkürzt dargestellt. In einer ersten Sektion des Kühltrogs 42 kann das Zugorgan 38 in heisses Wasser von beispielsweise 65°C eingeleitet werden. In einer oder mehreren weiteren Sektionen des Kühltrogs 42 wird das Zugorgan 38 durch immer kühleres Wasser geleitet, am Schluss durch normales Leitungs- oder Industriewasser mit Hahnentemperatur. Nach einer Variante kann der ganze Kühltrog 42 nicht erwärmtes Leitungs- oder Industriewasser enthalten. Während des Durchlaufs wird das Zugorgan 38 unter Anlegung einer Zugspannung gerade geführt, damit ein Kontakt mit den Seitenwänden der Kühlung vermieden werden kann. Der Kühltrog 42 kann auch einen oder mehrere Rückläufe für das Zugorgan 38 umfassen.

Vor und nach dem Kühltrog 42 ist je ein Kontrollgerät 44, 46 angeordnet, insbesondere zur Kontrolle der Dicke d des Zugorgans 38. Die gemessenen Dimensionen werden aufgezeichnet und für die voll- oder teilautomatische Steuerung der Produktionslinie 10 (z.B. Einstellung der Drahtabwicklung 12, der Vorheizung 26, 28, 30, des Extruders 32 und der Pressrollen 40) gespeichert. Weiter können die gespeicherten Daten für statistische Auswertungen und Qualitätsrapporte verwendet werden.

Die Zugorgane 38 werden beim Durchlauf durch eine automatisch oder manuell betätigbare Beschriftungseinrichtung 48 markiert, beispielsweise durch einen Tintenstrahldrucker mit einer auf der Oberfläche des Zugorgans 38 gut haftenden Tinte.

Ein Raupenförderer 50 mit zwei endlos umlaufenden Bändern gewährleistet, dass auf das bandförmige Zugorgan 38 eine konstante Zugkraft ausgeübt und eine konstante Durchlaufgeschwindigkeit aufrechterhalten wird.

Ein anschliessender Rollenspeicher 52, auch Akkumulator genannt, hat mehrere auf einem statischen Ständer 54 und auf einem mobilen Ständer 56 gehalterte Rollen 38. Die beiden Ständer 54, 56 sind in minimalem Abstand, im normalen Arbeitszustand, gezeigt. Bei einem Rollenwechsel muss der Rollenspeicher 52 während etwa 2 Minuten das extrudierte Zugorgan 38 aufnehmen, indem sich der mobile Ständer 56 wie gestrichelt angedeutet entgegengesetzt der Laufrichtung 80 verschiebt. Dieser mobile Ständer 56 dient auch als Tänzer, allfällige Unregelmässigkeiten in der Bandgeschwindigkeit können durch sein Verschieben ausgeglichen werden. Wenn der Rollenspeicher 52 zu beispielsweise 70 bis 75% gefüllt ist, wird die Bandgeschwindigkeit auf den Minimalwert gesenkt, welcher bei etwa 10 m/Min. liegt. Durch Erhöhen der Bandgeschwindigkeit nach dem Rollenspeicher 52 wird möglichst rasch wieder der in Fig. 1 mit ausgezogener Linie 38 dargestellte normale Arbeitszustand hergestellt.

Nach dem Rollenspeicher 52 ist nach der vorliegenden Ausführungsform ein zweiter Raupenförderer 60 mit einer vorhergehenden Führungsrolle 62 auf einem Halter 64 angeordnet. Eine dem zweiten Raupenförderer 60 nachgeordnete Schneideeinrichtung 66 längt das Zugorgan 38 fliegend ab, wenn die Speicherrolle 18 voll ist. Der Wechsel der Speicherrolle 18 ist auf den Rollenspeicher 52 abgestimmt, der Wechsel sollte innerhalb von 2 Minuten vollzogen sein. Eine Führungsrolle 68 gewährleistet ein regelmässiges Aufwickeln des Zugorgans 38 auf der Speicherrolle 18.

Im Querschnitt durch ein Zugorgan 38 gemäss Fig. 2a sind auf einer Ebene E in regelmässigen Abständen a von 0,5 mm acht Litzenseile 16 eines Durchmessers ∅ von 2,00 mm eingebettet. Diese Litzenseile 16 haben je eine Kernzlitze 124 und sechs periphere Litzenadern 126 von wiederum je sieben Stahlfasern 130 (vgl. Fig. 8). Die Litzenseile 16 haben den gleichen Abstand a zu den Oberflächen 70, 72. Das Zugorgan 38 hat eine gesamte Dicke d von 3 mm und eine Breite b von 25 mm.

Ein Zugorgan 38 gemäss Fig. 2b weist in der Mitte beidseits eine Längsnut 17 auf. Dadurch wird eine Einschnürung 15 gebildet.

In der Ausführungsform gemäss Fig. 2c hat das Zugorgan 38 zwischen den Litzenseilen 16 durch Längsnuten 17 in der Ummantelung 39 gebildete längslaufende Einschnürungen 15. Die Längsnuten 17 beeinträchtigen die Zugfestigkeit des Zugorgans 38 nicht oder nur marginal. Das Zugorgan 38 ist jedoch als Ganzes flexibler, beispielsweise bei der Verwendung als Spannelement zur Fixierung von Gegenständen.

Die Aussenkonturen der Ummantelung 39 werden auch durch die Pressrollen 40 (Fig. 1) festgelegt, welche eine entsprechend strukturierte Mantelfläche haben. Die Matrizenöffnung des Extruders kann entsprechend ausgebildet, aber auch langrechteckig sein.

Fig. 2d zeigt ein Zugorgan 38 mit unterschiedlich dicken Litzenseilen 16. Die innen liegenden Litzenseile 16 sind kleiner, die äusseren grösser. Auf einer Seite ist die Oberfläche 72 der Ummantelung 39 an die Durchmesser der Litzenseile 16 angepasst, es wird eine breite Längsnut 17 gebildet, auf der andern Seite ist die Oberfläche 70 durchgehend glatt. Diese Ausführungsform eignet sich wiederum für spezielle Zwecke, die äussere Form der Ummantelung 39 wird wiederum durch die Pressrollen 40 (Fig. 1) festgelegt.

Die Ausführungsform gemäss Fig. 2e ist im Gegensatz zu den vorhergehenden Beispielen im Querschnitt asymmetrisch ausgebildet. Die unterschiedlich dicken Litzenseile 16 sind durch einen Verbindungssteg 15 miteinander verbunden und haben überall eine etwa gleich dicke Ummantelung 39.

Fig. 3 zeigt einen Horizontalschnitt durch eine Fadenführung 74 und eine Matrize 76 auf der Höhe der dem Fadendurchmesser Ø entsprechenden acht Bohrungen 78 für die mit wenig Spiel in Laufrichtung des Pfeils 80 einlaufenden Litzenseile 16, von welchen lediglich einer als Teilstück angedeutet ist. Parallel zu Fadenführung 74 und Matrize 76 lösbar verbindenden Schrauben 82 verlaufen Bohrungen 84 mit einem Durchmesser von vorliegend 6 mm zur Einspeisung von verflüssigter Kunststoffmasse 86, welche - auf der Schnittebene nicht sichtbar - in einen Matrizenhohlraum 88 mit den durchlaufenden Litzenseile 16 gepresst wird. Der verflüssigte Kunststoff 86 umhüllt die Litzenseile 16. Der Verbund verlässt den im Querschnitt langrechteckigen Austrittsschlitz 116 durch die Matrizenöffnung 90 als ummanteltes Zugorgan 38.

Fig. 4 zeigt eine durch ein Litzenseil 16 gelegte vertikale Schnittebene durch die Fadenführung 74 und Matrize 76 gemäss Fig. 3. Die Litzenseile 16 werden wiederum in Laufrichtung 80 durch die Fadenführung 74 und die Matrize 76 geführt. Vor dem Eintritt in die Bohrung 78 durchläuft das Litzenseil 16 vorerst eine äussere Einlaufnut 92 und eine innere kleinere Einlaufnut 94, welche die Herstellung der präzisen, eng aneinander liegenden Bohrungen 78 für die Litzenseile 16 vereinfachen. Ein V-förmig ausgebildeter Einlaufschlitz 96 wird über die Bohrungen 84 gemäss Fig. 3 mit verflüssigter Kunststoffmasse 86 gespeist.

Mittels Stellschrauben 98, 100, welche über Führungsplatten 102, 104 auf die Matrize 76 einwirken, kann diese in vertikaler Lage um Δt von höchstens etwa 0,5 mm gegenüber der Matrize 76 verschoben werden. Dieses Verschieben kann mit einer Präzision von etwa 0,05 mm oder weniger erfolgen. Bei einem Verschieben der Matrize 76 um Δt verschiebt sich das Litzenseil 16 innerhalb dem Austrittsschlitz 116 bzw. der Matrizenöffnung 90 um den gleichen Betrag. So kann das Litzenseil 16 innerhalb der Matrizenöffnung 90 genau positioniert werden. Entsprechend genau ist die Lage der Litzenseile 16 im Zugorgan 38 (Fig. 2). In derselben Halterung 106 wie die Matrize 76 ist auch die Fadenführung 74 durch Stellschrauben 108 und Führungsplatten 110 positionierbar, wenn anstelle einer durchgehenden Bohrung 112 auch in der Fadenführung 74 unten Stellschrauben angeordnet sind. Falls auch die Fadenführung 74 verschiebbar ist, kann der gegenseitige Verschiebungsbereich Δt zwischen Fadenführung 74 und Matrize 76 entsprechend vergrössert werden.

In Fig. 5 sind die entlang einer Ebene P aufeinander liegenden Fadenführung 74 und Matrize 76 vergrössert dargestellt. Das durchlaufende, gespannte Litzenseil 16 läuft in Richtung 80 durch die Fadenführung 74 und die Matrize 76. Bei einer Verschiebung der Fadenführung 74 entlang der Ebene P wird das Litzenseil 16 mitgenommen, weil es mit sehr wenig Spiel durch die Bohrung 78 (Fig. 4) geführt ist. Wird bei fixierter Fadenführung 74 die Matrize 76 verschoben, so bleibt das Litzenseil 16 davon unberührt. Da sich jedoch die vertikale Lage des Austrittschlitzes 116 mit der Matrizenöffnung 90 ändert, wird die Distanz des Litzenseils 16 zur oberen und unteren Begrenzung des Austrittsschlitzes 116 verändert. So kann durch eine einfache Verschiebung der Matrize 76 entlang der Ebene P in vertikaler Richtung um einen oder wenige Zehntel Millimeter die Lage des Litzenseils 16 in der Mitte des Austrittsschlitzes 116 genau festgelegt werden. Dadurch wird das Litzenseil 16 genau in die Mitte des Zugorgans 38 justiert, d.h. die Ummantelung 39 ist am oberen und unteren Scheitel des Litzenseils gleich gross.

In der Ausführungsform nach Fig. 6 ist zur Co-Extrusion zwischen der Fadenführung 74 und der Matrize 76 eine weitere Matrize 75 angeordnet, die gleiche Kunststoffummantelung 39 (Fig. 5) wird örtlich getrennt nacheinander aufgetragen.

Die Matrize 76 für das Zugorgan 38 (Fig. 5) hat einen abstehenden Kragen 114 mit einem verlängerten Austrittsschlitz 116 und einer Austrittsöffnung 90. Dank der Anordnung des Kragens 114 kann die Kunststoffummantelung 39 besser abkühlen und sich vor dem Austritt aus der Matrizenöffnung 90 besser verfestigen.

Die Fadenführung 74 umfasst zwei periphere Bohrungen 118 und zwei V-förmine Einlaufschlitze 96, ebenfalls für den verflüssigten Kunststoff 86. Die Bohrungen 78 für den Durchlauf der Litzenseile 16 bleiben im wesentlichen unverändert, ebenfalls die äussere und innere Einlaufnut 92, 94.

Die weitere, zwischen der Fadenführung 74 und der Matrize 76 angeordnete Matrize 75 umfasst zwei V-förmige Einlaufschlitze 96, welche den zugeführten verflüssigten Kunststoff 86 vom den peripheren Bohrungen 118 zum Matrizenhohlraum 88 führen. Ein vorgelagerter Matrizenhohlraum 120 wird durch die V-förmigen Einlaufschlitze 96 in der Fadenführung 74 gespeist. Von diesem Matrizenhohlraum 120 führt ein Verbindungskanal 122 zum Matrizenhohlraum 88 in der Matrize 76, wobei dieser Verbindungskanal 122 einen etwas grösseren Durchmesser als die vorgelagerte Bohrung 78 hat. Das durchlaufende Litzenseil 16 erreicht den Matrizenhohlraum 88 bereits vorbeschichtet.

Nach einer in Fig. 7 dargestellten Variante ist die Fadenführung 74 gemäss Fig. 6 so gestaltet, dass durch die Einlaufschlitze 96 ein Imprägnierungsmittel 87 für das Litzenseil 16 in den vorgelagerten Matrizenhohlraum 120 geführt wird. Durch die Einlaufschlitze 97 wird die verflüssigte Kunststoffmasse 86 in den Matrizenhohlraum 88 geführt. Selbstverständlich können durch die Einlaufschlitze 96, 97 auch verschiedene verflüssigte Kunststoffmassen 86 zugeführt werden.

Fig. 8 zeigt einen Querschnitt durch ein Litzenseil 16. Eine zentrale Litzenader, die Kernlitze 124, ist mit einer flexiblen thermoplastischen Kunststoffschicht 126, vorliegende Polyethylen, umhüllt. Beim Verseilen mit sechs Litzenadem, den peripheren Litzenadern 128, verformt sich die fliessfähige oder zähflüssige Kunststoffschicht und fliesst in die Seilrillen. Die Einzelfasern 130 der Kernlitze 124 und peripheren Litzenadern 128 sind in an sich bekannter Weise verseilt.

Ein Litzenseil 16 mit einem Aussendurchmesser von beispielsweise wenigstens etwa 5 mm kann als Einzelseil die für ein Zugorgan erforderliche Zugkraft erreichen. Vorzugsweise wird das Litzenseil mit einem Aussenmantel aus Kunststoff geschützt.

Litzenseile 16 mit einem kleineren Durchmesser werden parallel durch eine Produktionslinie 10 gemäss Fig. 1 geführt, mit einem Kunststoff 39 ummantelt und als Zugorgan 38 mit mehreren Litzenseilen 16 verwendet.

Die Beschichtung eines Litzenteils 16 oder einer Kernlitze 124 kann beliebig in an sich bekannter Weise oder bevorzugt mit einer modifizierten Produktionslinie gemäss Fig. 1 erfolgen.

## Patentansprüche

1. Produktionslinie (10) zur Einbettung von mehreren auf einer Seilebene (E) liegenden Litzenseilen (16) in einen flexiblen thermoplastischen Kunststoff (39), welche Produktionslinie (10) je eine Spule (14) zum Abwickeln der Litzenseile (16), eine Einrichtung (24) zum exakten Richten der Litzenseile (16), eine Heizung (26, 28, 30) zum Vorwärmen der Litzenseile (16), wenigstens einen Extruder (32) zur Co-Extrusion der Litzenseile (16) in einer flexiblen Kunststoffummantelung, einen Kühltrog (42), einen Rollenspeicher (52), eine Schneideeinrichtung (66) und eine Speicherrolle (18) umfasst, **dadurch gekennzeichnet, dass** der Extruder (32) eine Fadenführung (74) und wenigstens eine Matrize (76) aufweist, welche individuell in einer zur Seilebene (E) abgewinkelten Ebene (P) mit- und gegeneinander justierbar sind.

2. Produktionslinie (10) nach Anspruch 1, **dadurch gekennzeichnet, dass** die Litzenseile (16) durch eine Fadenführung (74) und wenigstens eine Matrize (75,76) geführt sind, die in einem Bereich (Δt) von ± 0,5 bis 2 mm mit einer Genauigkeit von vorzugsweise ± wenigstens 0,1 mm relativ zueinander einstellbar sind, wobei die Ebenen (E,P) in einem Winkel von 45 bis 135°, vorzugsweise etwa 90°, verlaufen.

3. Produktionslinie (10) nach Anspruch 1 oder 2, **dadurch gekennzeichnet, dass** die Litzenseile (16) eine Fadenführung (74) und wenigstens eine Matrize (75,76) durchlaufen, die mit Stellschrauben (98,100,108) positionierbar sind.

4. Produktionslinie (10) nach einem der Ansprüche 1 bis 3, **dadurch gekennzeichnet, dass** die Litzenseile (16) eine Fadenführung (74) und wenigstens eine Matrize (75,76) durchlaufen, welche individuell auswechselbar sind.

5. Produktionslinie (10) nach einem der Ansprüche 1 bis 4, **dadurch gekennzeichnet, dass** die Seilführung (74) und eine zwei- oder mehrteilig ausgebildete Matrize (75,76) des Extruders (32) zwei oder mehr getrennte Zuführsysteme (96,120 und 120,88) haben, insbesondere für den verflüssigten Kunststoff (86).

6. Produktionslinie (10) nach einem der Ansprüche 1 bis 5, **dadurch gekennzeichnet, dass** bei mehreren Litzenseilen (16), welche parallel angeordnet auf einer Ebene (E) durch die Produktionslinie (10) laufen, unmittelbar nach dem Extruder (32) Pressrollen (40) angeordnet sind.

7. Produktionslinie (10) nach Anspruch 6, **dadurch gekennzeichnet, dass** die Pressrollen (40) aus wenigstens einem Rollenpaar, insbesondere zwei Rollenpaaren, bestehen, welche in zu den durchlaufenden Litzenseilen (16) rechtwinkliger Richtung justierbar sind.

8. Produktionslinie (10) nach einem der Ansprüche 1 - 7, **dadurch gekennzeichnet, dass** die Matrize (76) des Extruders (32) einen abstehenden Kragen (114) mit einem verlängerten Austrittsschlitz (116) und einer Austrittsöffnung (90) hat, wobei der Kragen (114) zur Abkühlung und Verfestigung der Kunststoffummantelung (39) dient.

## Claims

1. Production line (10) for embedding several stranded cables (16), lying on a cable plane (E), in a flexible thermoplastic material (39), which production line (10) in each case comprises a reel (14) for unwinding the stranded cables (16), a device (24) for exactly aligning the stranded cables (16), a heater (26, 28, 30) for preheating the stranded cables (16), at least one extruder (32) for coextruding the stranded cables (16) in a flexible sheathing of plastic, a cooling trough (42), a roll storage system (52), a cutting device (66) and a storage roll (18), **characterized in that** the extruder (32) has a thread guide (74) and at least one die (76), which are individually adjustable with and with respect to one another in a plane (P) angled away from the cable plane (E).

2. Production line (10) according to Claim 1, **characterized in that** the stranded cables (16) are guided through a thread guide (74) and at least one die (75, 76), which can be set in relation to one another in a range (At) from ± 0.5 to 2 mm with an accuracy of preferably ± at least 0.1 mm, the planes (E, P) extending at an angle of 45 to 135°, preferably approximately 90°.

3. Production line (10) according to Claim 1 or 2, **characterized in that** the stranded cables (16) run through a thread guide (74) and at least one die (75, 76), which can be positioned by adjusting screws (98, 100, 108).

4. Production line (10) according to one of Claims 1 to 3, **characterized in that** the stranded cables (16) run through a thread guide (74) and at least one die (75, 76), which are individually exchangeable.

5. Production line (10) according to one of Claims 1 to 4, **characterized in that** the cable guide (74) and a die (75, 76), formed in two or more parts, of the extruder (32) have two or more separate feed systems (96, 120 and 120, 88), in particular for the liquefied plastic (86).

6. Production line (10) according to one of Claims 1 to 5, **characterized in that**, in the case of a number of stranded cables (16) which run through the production line (10) while arranged in parallel on a plane (E), pressing rolls (40) are arranged directly downstream of the extruder (32).

7. Production line (10) according to Claim 6, **characterized in that** the pressing rolls (40) comprise at least one pair of rolls, in particular two pairs of rolls, which are adjustable in a direction at right angles to the stranded cables (16) running through.

8. Production line (10) according to one of Claims 1 to 7, **characterized in that** the die (76) of the extruder (32) has a protruding collar (114) with an extended outlet slot (116) and an outlet opening (90), the collar (114) serving for cooling and solidifying the sheathing of plastic (39).

## Revendications

1. Ligne de production (10) pour enrober plusieurs câbles à torons (16) reposant sur un plan de câble (E) de matière thermoplastique flexible (39), ladite ligne de production (10) comprenant respectivement une bobine (14) pour dérouleur les câbles à torons (16), un dispositif (24) pour orienter avec exactitude les câbles à torons (16), un chauffage (26, 28, 30) pour préchauffer les câbles à torons (16), au moins une extrudeuse (32) pour co-extruder les câbles à torons (16) dans une gaine en plastique flexible, une auge de refroidissement (42), un réservoir de rouleaux (52), un dispositif de coupe (66) et un rouleau de réserve (18), **caractérisée en ce que** l'extrudeuse (32) comporte un guide-fil (74) et au moins une matrice (76) pouvant être ajustés individuellement l'un avec l'autre et l'un par rapport à l'autre dans un plan (P) déroulé par rapport au plan de câble (E).

2. Ligne de production (10) selon la revendication 1, **caractérisée en ce que** les câbles à torons (16) sont guidés à travers un guide-fil (74) et au moins une matrice (75, 76) pouvant être réglés dans une plage (4t) de ± 0,5 à 2 mm avec une précision de préférence d'au moins ± 0,1 mm l'un par rapport à l'autre, les plans (E, P) s'étendant selon un angle allant de 45 à 135°, de préférence d'approximativement 90°.

3. Ligne de production (10) selon la revendication 1 ou 2, **caractérisée en ce que** les câbles à torons (16) traversent un guide-fil (74) et au moins une matrice (75, 76) pouvant être positionnés à l'aide de vis de réglage (98, 100, 108).

4. Ligne de production (10) selon l'une quelconque des revendications 1 à 3, **caractérisée en ce que** les câbles à torons (16) traversent un guide-fil (74) et au moins une matrice (75, 76) pouvant être remplacés individuellement.

5. Ligne de production (10) selon l'une quelconque des revendications 1 à 4, **caractérisée en ce que** le guide-câble (74) et une matrice (75, 76) réalisée en deux parties ou plus de l'extrudeuse (32) comportent deux systèmes d'amenée (96, 120 et 120, 88) ou plus séparés, notamment pour la matière plastique (86) liquéfiée.

6. Ligne de production (10) selon l'une quelconque des revendications 1 à 5, **caractérisée en ce qu'**en présence de plusieurs câbles à torons (16) s'étendant parallèlement à travers la ligne de production (10) sur un plan (E), des rouleaux compresseurs (40) sont disposés directement après l'extrudeuse (32).

7. Ligne de production (10) selon la revendication 6, **caractérisée en ce que** les rouleaux compresseurs (40) se composent d'au moins une paire de rouleaux, notamment de deux paires de rouleaux, pouvant être ajustés dans la direction perpendiculaire aux câbles à torons (16) traversants.

8. Ligne de production (10) selon l'une quelconque des revendications 1 à 7, **caractérisée en ce que** la matrice (76) de l'extrudeuse (32) comporte un collet (114) saillant doté d'une fente de sortie (116) allongée et d'une ouverture de sortie (90), le collet (114) servant au refroidissement et à la consolidation de la gaine en plastique flexible (39).
